# EUROPEAN PATENT APPLICATION

(11) **EP 4 742 218 A1**
(43) Date of publication of application: **13.05.2026**
(21) Application number: 25214620.4
(22) Date of filing: 10.11.2025
(51) Int. Cl.: G08G 5/32, G08G 5/55, G08G 5/57

(54) **FLIGHT PATH GENERATION PLATFORM, UAV AND METHOD ADAPTED FOR SUPPORTING AERIAL LIVE VIDEO BROADCASTING**

(30) Priority: 12.11.2024 US 202463719301 P
(71) Applicant: ZEITGEIST VENTURES GmbH, 42327 Wuppertal (DE)
(72) Inventor: GUFFARTH, Daniel, 88697 Bermatingen (DE); KRUPA, Miroslav, 664 04 Mokra-Horakov (CZ)
(74) Representative: Riechelmann & Carlsohn Patentanwälte PartG mbB

(57) **Abstract**

Flight path generation platform and unmanned aerial vehicle (UAV). The platform generates and displays a visual representation of a three-dimensional (3D) model of an environment on a display. The platform generates a visual representation of a flight path of the UAV superposed to the visual representation of the 3D model of the environment. The platform generates the flight path of the UAV based on the visual representation of the flight path. The flight path is loaded and stored in a memory of the UAV. The UAV processes the flight path to generate control commands sent to flying components of the UAV, the control commands controlling operations of the flying components so that the UAV follows a trajectory according to the flight path. The UAV transmits a video generated by a video camera of the UAV via a wireless communication interface of the UAV.

## Description

### TECHNICAL FIELD

The present disclosure relates to the field of aerial live video broadcasting. More specifically, the present disclosure relates to a flight path generation platform, unmanned aerial vehicle (UAV) and method adapted for supporting aerial live video broadcasting.

### BACKGROUND

A camera dolly is used for performing live video broadcasting of certain types of events, like car racing. Tracks are installed at a location allowing good video coverage of the event. The dolly moves on the tracks and carries a video camera. For example, the rails are installed along a racing track at a racing circuit. The movement of the dolly on the tracks allows it to follow a target (e.g. a car or a group of cars) for a certain amount of time with the video camera carried by the dolly.

Although the camera dolly provides a significant improvement by contrast to a fixed video camera, the movement of the video camera remains limited, even for an actuated video camera having a degree of freedom of movement when mounted on the dolly. For example, the dolly (and the video camera) moves along a straight line. For each point of the straight line, the video camera has the capability to be rotated along a vertical axis.

The development in drone technology has been very fast in the last years, rendering this technology available and affordable for more and more fields of activity. In particular, it is now current to have a video camera embedded in a drone and wirelessly transmitting (video) aerial views to a drone control device operated by a user of the drone. The usage of a drone having live video broadcasting capabilities appears to be a good solution to overcome the limitations in terms of freedom of movement of a camera mounted on a dolly.

There is therefore a need for a new flight path generation platform, UAV and method adapted for supporting aerial live video broadcasting.

### SUMMARY

According to a first aspect, the present disclosure relates to a flightpath generation platform. The platform comprises a display, a user interface, memory and a processing unit. The memory stores a three-dimensional (3D) model of an environment. The environment is located in a geographical area and comprises a plurality of elements located in the geographical area. The processing unit generates a visual representation of the 3D model of the environment. The processing unit displays the visual representation of the 3D model of the environment on the display. The processing unit generates a visual representation of a flight path of an unmanned aerial vehicle (UAV) on the display through interactions of a user with the user interface. The visual representation of the flight path is superposed to the visual representation of the 3D model of the environment. The processing unit generates the flight path of the UAV based on the visual representation of the flight path, the flight path of the UAV comprising a plurality of way points, each way point having 3D coordinates.

According to a particular aspect, the 3D model of the environment comprises a 3D model of the elements of the environment and the visual representation of the 3D model of the environment comprises a visual representation of the 3D model of the elements of the environment.

According to another particular aspect, the environment is a car racing circuit and the elements of the environment comprise at least one of the following: a racing track, areas where spectators are located, paddocks, other buildings, and grass areas.

According to still another particular aspect, a determination of the 3D coordinates of the way points is based on 3D coordinates of the 3D model of the environment, taking into consideration the relative position on the display of the visual representation of the flight path with respect to the visual representation of the 3D model of the environment.

According to yet another particular aspect, the 3D coordinates of each way point consist of geospatial coordinates. In a particular embodiment, the geospatial coordinates comprise absolute Global Positioning System (GPS) coordinates and altitude.

According to another particular aspect, the 3D model of the environment further comprises fly restriction data for enforcing at least one of a no-fly zone and a regulated fly zone, the generation of the flight path of the UAV taking into consideration the fly restriction data. In a particular embodiment, the fly restriction data comprise a two-dimensional (2D) or a 3D model of the at least one of the no-fly zone and the regulated fly zone.

According to still another particular aspect, the processing unit further generates a geofence for at least some of the way points of the flight path. The geofence defines a 3D perimeter within which the UAV is authorized to be located for a given waypoint of the flight path.

According to yet another particular aspect, the processing unit uses the flight path and the 3D model of the environment to generate a simulated view of the environment from the UAV when the UAV follows a trajectory according to the flightpath, the simulated view being displayed on the display.

According to a second aspect, the present disclosure relates to an unmanned aerial vehicle (UAV). The UAV comprises memory, a video camera, a wireless communication interface, flying components and a processing unit. The memory stores a flight path comprising a plurality of way points having 3D coordinates. The processing unit processes the flight path to generate control commands sent to the flying components. The control commands control operations of the flying components so that the UAV follows a trajectory according to the flight path. The processing unit transmits a video generated by the video camera via the wireless communication interface.

According to a particular aspect, the video camera is adapted to perform aerial live video broadcasting.

According to another particular aspect, the processing unit generates a timestamp for each way point of the flight path. In a particular embodiment, the timestamps are generated based on a predetermined start time and a predetermined speed of the UAV. In another particular embodiment, the control commands sent to the flying components comprise an acceleration of the UAV in one or more directions. The acceleration of the UAV in the one or more directions is calculated by the processing unit so that the UAV having reached a given waypoint of the flying path at a time compliant with the associated timestamp, the UAV reaches the next waypoint of the flying path at a future time compliant with the timestamp associated to the next waypoint.

According to still another particular aspect, the flight path is received via a wired communication interface of the UAV when the UAV is not flying or the flight path is received via the wireless communication interface while the UAV is flying.

According to yet another particular aspect, the processing of the flight path to generate the control commands is triggered by one of the following events: reception via the wireless communication interface of a trigger command or occurrence of a time trigger.

According to another particular aspect, a geofence is associated to at least some of the way points. The processing unit determines a modification of the trajectory of the UAV compliant with the geofence and applies the modification of the trajectory to the flying components. In a particular embodiment, the processing unit receives one or more commands via the wireless communication interface for modifying the trajectory of the UAV. The processing unit determines based on the one or more commands the modification of the trajectory of the UAV compliant with the geofence.

According to still another particular aspect, the processing unit determines a modification of at least one operating parameter of the video camera and applies the modification of the at least one operating parameter to the video camera. The modification is determined based on at least one of the following: predetermined information stored in the memory, a command received via the wireless communication interface, and execution by the processing unit of an algorithm for automatically controlling the video camera.

According to yet another particular aspect, the processing unit receives one or more commands via the wireless communication interface for modifying operating conditions of the video camera. The processing unit performs at least one of the following: (i) determining a modification of at least one operating parameter of the video camera to modify the operating conditions of the camera according to the one or more commands, and applying the modification of the at least one operating parameter to the video camera; and (ii) determining a modification of the trajectory of the UAV to modify the operating conditions of the camera according to the one or more commands, and applying the modification to the trajectory to the flying components..

According to another particular aspect, the processing unit executes a tracking algorithm to follow one or more targets with the video camera. The tracking algorithm automatically determines at least one of the following based on an analysis of the video generated by the video camera: (i) a modification of at least one operating parameter of the video camera, the modification of the at least one operating parameter being applied by the processing unit to the video camera; and (ii) a modification of the trajectory of the UAV, the modification to the trajectory being applied by the processing unit to the flying components.

According to a third aspect, the present disclosure relates to a method for providing aerial live broadcasting from an unmanned aerial vehicle (UAV). The method comprises storing, in a memory of a flight path generation platform, a flight path comprising a plurality of way points having three-dimensional (3D) coordinates. The method comprises generating, by a processing unit of the platform, a visual representation of the 3D model of the environment. The method comprises displaying, by the processing unit of the platform, the visual representation of the 3D model of the environment on a display of the platform. The method comprises generating, by the processing unit of the platform, a visual representation of a flight path of the UAV through interactions of a user with a user interface of the platform. The method comprises displaying, by the processing unit of the platform, the visual representation of the flight path of the UAV on the display of the platform. The visual representation of the flight path of the UAV is superposed to the visual representation of the 3D model of the environment. The method comprises generating, by the processing unit of the platform, the flight path of the UAV based on the visual representation of the flight path of the UAV. The flight path of the UAV comprises a plurality of way points, each way point having 3D coordinates. The method comprises storing the flight path in a memory of the UAV. The method comprises processing, by a processing unit of the UAV, the flight path to generate control commands sent to flying components of the UAV. The control commands control operations of the flying components, so that the UAV follows a trajectory according to the flight path. The method comprises transmitting a video generated by a video camera of the UAV via a wireless communication interface of the UAV.

According to a particular aspect, the video camera of the UAV is adapted to perform aerial live video broadcasting.

According to another particular aspect, the method further comprises performing at least one of: (i) determining, by the processing unit of the UAV, a modification of the trajectory of the UAV compliant with a geofence associated to at least some of the way points, and applying the modification of the trajectory to the flying components of the UAV; and (ii) determining by the processing unit of the UAV a modification of at least one operating parameter of the video camera of the UAV and applying the modification of the at least one operating parameter to the video camera of the UAV

### BRIEF DESCRIPTION OF THE DRAWINGS

Embodiments of the disclosure will be described by way of example only with reference to the accompanying drawings, in which:
Figure 1 represents components of a flight path generation platform;
Figure 2 represents information displayed on a display of the flight path generation platform;
Figure 3 represents a UAV supporting aerial live video broadcasting; and
Figures 4 and 5 represent a method for providing aerial live broadcasting from a UAV.

### DETAILED DESCRIPTION

The foregoing and other features will become more apparent upon reading of the following non-restrictive description of illustrative embodiments thereof, given by way of example only with reference to the accompanying drawings. Like numerals represent like features on the various drawings.

Various aspects of the present disclosure generally address live video broadcasting from an unmanned aerial vehicle (UAV), for example from a drone. More specifically, the present disclosure describes a flight path generation platform adapted for generating a flight path of a UAV, based on a three-dimensional (3D) model of an environment where the UAV will be flying. The present disclosure also describes a UAV having a video camera adapted to perform aerial live video broadcasting. The UAV follows a trajectory in accordance with the flight path generated by the platform. Different functionalities for modifying the trajectory of the UAV and the operating conditions of the video camera are also described.

The following terminology is used throughout the present disclosure:
Trajectory of a UAV: the trajectory of a UAV is a route followed by the UAV while it is flying.

Flight path of a UAV: the flight path of a UAV is a numerical representation of the route of the UAV. A UAV guidance system processes the flight path to make the UAV follow a trajectory according to the flight path.

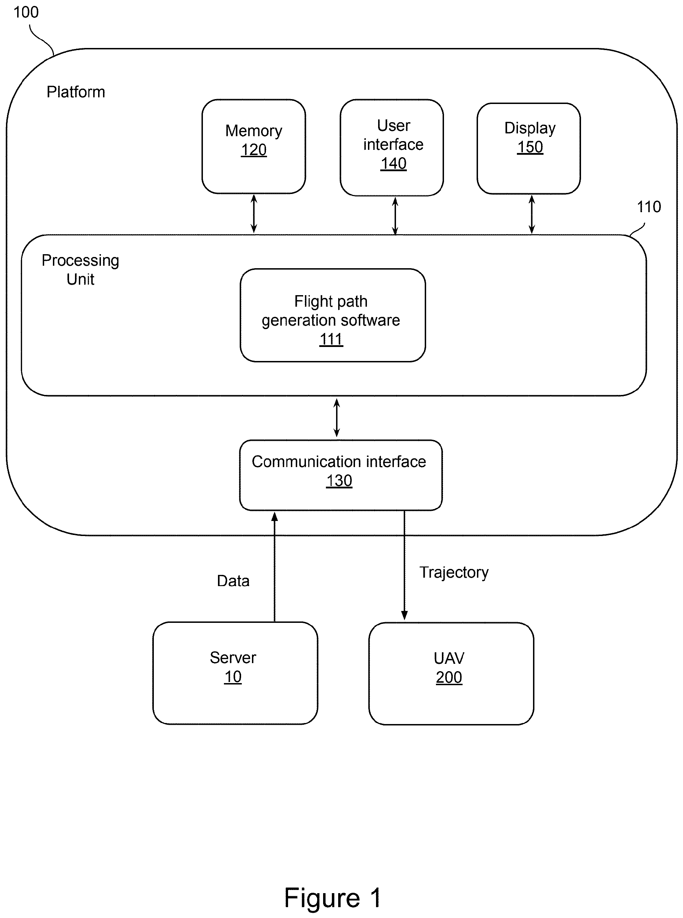

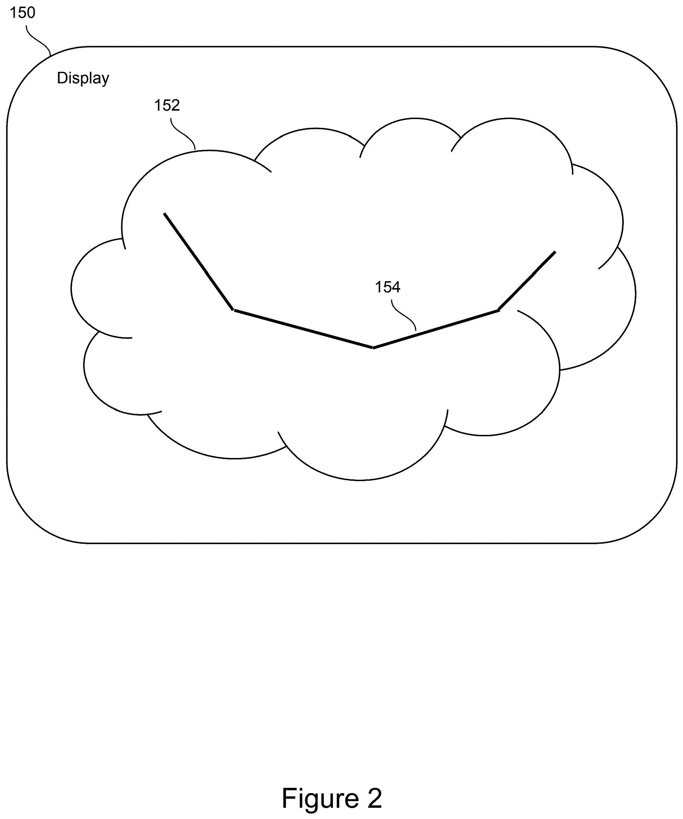

Reference is now made concurrently to **Figures 1** **and** **2****,** where Figure 1 represents components of a flight path generation platform 100 and Figure 2 represents information displayed on a display of the flight path generation platform 100.

The flight path generation platform 100 is adapted for generating a flight path of a UAV, for the purpose of having the UAV perform an aerial live video broadcasting while following a trajectory according to the flight path. For simplification purposes, in the following, the flight path generation platform 100 will be referred to as the platform 100.

The platform 100 comprises a processing unit 110, memory 120, at least one communication interface 130, a user interface 140, and a display 150. The platform 100 may comprise additional components not represented in Figure 1 for simplification purposes (e.g. at least one other communication interface 130, at least one other display 150, etc.).

The processing unit 110 comprises one or more processors (not represented in Figure 1) capable of executing instructions of computer programs. Each processor may further comprise one or several cores. Alternatively or complementarily, the processing unit 110 comprises one or more Field-Programmable Gate Arrays (FPGAs), one or more Application-Specific Integrated Circuits (ASICs), one or more Graphical Processing Units (GPUs) for performing compute-intensive tasks, etc.

The memory 120 stores instructions of computer programs executed by the processing unit 110, data generated by the execution of the computer programs, data received via the communication interface 130, etc. Only a single memory 120 is represented in Figure 1, but the platform 100 may comprise several types of memories, including volatile memory (such as a volatile Random Access Memory (RAM), etc.) and non-volatile memory (such as a hard drive, solid-state drive (SSD), electrically-erasable programmable read-only memory (EEPROM), flash, etc.).

The communication interface 130 allows the computing device 100 to exchange information with other devices (e.g. a UAV 200, a server 10 storing information used by the platform 100, etc.) over one or more communication networks (not represented in Figure 1 for simplification purposes). The term communication interface 130 shall be interpreted broadly, as supporting a single communication standard / technology, or a plurality of communication standards / technologies. Examples of wireless communication technologies supported by the wireless communication interface 130 include cellular, Wi-Fi, Bluetooth^{®}, Bluetooth Low Energy (BLE), wireless mesh, etc. Examples of wired communication technologies supported by the wireless communication interface 130 include Ethernet, etc. The communication interface 130 usually comprises a combination of hardware and software executed by the hardware, for implementing the communication functionalities of the wireless communication interface 130. As mentioned previously, the platform 100 may include several communication interfaces 130 for exchanging data with different kind of devices.

The user interface 140 comprises at least one of the following: a touch screen user interface integrated to the display 150, a keyboard, a mouse, at least one button, etc.

The display 150 is either a regular display or a touchscreen display. As mentioned previously, the platform 100 may include several displays 150 for facilitating the interactions of a user with the platform 100.

The processing unit 110 implements a plurality of functionalities related to the generation of a flight path for the UAV 200. These functionalities will be described in detail in the following paragraphs. In an exemplary implementation, a flight path generation software 111 executed by the processing unit 110 implements these functionalities.

The memory 120 stores a three-dimensional (3D) model of an environment where the UAV 200 will be flying. The environment is located in a determined geographical area and includes a plurality of elements located in the geographical area.

For example, the environment is a car racing circuit (e.g. a formula one racing circuit). The geographical area is the premises of the circuit. The environment comprises the following elements: the racing track, the areas where the spectators are located, the paddocks, other buildings, grass areas, etc.

Each element is represented by a 3D model, comprising a plurality of 3D coordinates, for instance geospatial coordinates comprising absolute Global Positioning System (GPS) coordinates and altitude. In another example, each 3D coordinate is defined in a cartesian 3D coordinate system. The 3D model of the environment comprises the 3D model of the plurality of elements.

The 3D model is received from the server 10 via the communication interface 130. Alternatively, the 3D model is generated by the processing unit 110 based on data received from the server 10 (or from a plurality of servers 10) via the communication interface 130. The server 10 is a repository where 3D models (and / or data allowing to construct 3D models) of multiple environments located in multiple geographical areas, are stored

The processing unit 110 generates a visual representation of the 3D model of the environment (referred to as the environment visual representation) 152, comprising a visual representation of the 3D model of each element of the environment (referred to as the element visual representation). The environment visual representation 152 is displayed on the display 150. The environment visual representation 152 can be displayed in 3D, semi-3D, etc.

A user of the platform 100 interacts with the user interface 140 to generate a visual representation of a flight path of the UAV 200 (referred to as the flight path visual representation 154). which is also displayed on the display 150.

The superposition of the environment visual representation 152 and the flight path visual representation 154 on the display 150 provides a realistic simulation of the real trajectory of the UAV 200 in the real environment (e.g. a car racing circuit).

Based on the flight path visual representation 154, a flight path of the UAV 200 is generated by the processing unit 110. The flight path comprises a plurality of waypoints with 3D coordinates, for instance geospatial coordinates comprising the absolute GPS coordinates and altitude of the UAV 200.

The determination of the 3D coordinates of the way points is based on the 3D coordinates of the 3D model the environment (more specifically the 3D coordinates of the 3D model of the elements of the environment), taking into consideration the relative position (on the display 150) of the flight path visual representation 154 with respect to the environment visual representation 152.

If the 3D model uses a cartesian 3D coordinate system, the 3D coordinates of the flight path can be converted into absolute GPS coordinates and altitude, which are commonly used in a UAV guidance system.

For each waypoint of the flight path, the altitude is automatically determined by the processing unit 110. For example, for each element of the environment that the UAV 200 is flying over, the altitude of the UAV 200 is determined to respect a predetermined distance above the element. The predetermined distance is defined for the entire environment. Alternatively, the predetermined distance is defined for each element (or group of similar elements) of the environment.

Alternatively or complementarily, the user has the capability to determine (via the user interface 140) the altitude of the UAV 200 for at least some of the waypoints of the flight path. However, the previously mentioned predetermined distances need to be respected in this case too.

For example, taking the previous example of a car racing circuit located on a flat ground having an altitude of 500 meters. The predetermined distance above the racing track is 10 meters and the predetermined distance above the grass areas (without public) is 5 meters. A portion of the trajectory and corresponding flight path of the UAV 200 is above the racing tracks. The altitude of the UAV 200 is set by default to 510 meters. The user is allowed to modify the altitude above 510 meters. An upper limit for the altitude above the ground is also generally set, for example a maximum of 100 meters above the ground. In this case, the altitude of the UAV 200 can be set by the user between 510 and 600 meters.

Another portion of the trajectory and corresponding flight path of the UAV 200 is above the grass areas. The altitude of the UAV 200 is set by default to 505 meters. The user is allowed to modify the altitude above 505 meters. Taking into account the aforementioned upper limit for the altitude above the ground, the altitude of the UAV 200 can be set by the user between 505 and 600 meters.

The platform 100 further provides the following (optional) functionality. The 3D model comprises fly restriction data for enforcing flying restrictions. For example, the fly restriction data include 2D or 3D models of no-fly zones above which the UAV 200 is not allowed to fly. The 2D or 3D model of each no-fly zone comprises a plurality of 2D or 3D coordinates defining the no-fly zone. Optionally, a visual representation of each no-fly zone is generated by the processing unit 110 and displayed on the display 150. This allows the user to visually identify the no-fly zones above which the UAV 200 is not allowed to fly, when generating the flight path visual representation 154. A 2D model of each no-fly zone may be sufficient. A 3D model can be used for generating a more realistic visual representation of the no-fly zone.

The processing unit 110 automatically prevents the generation of a flight path of the UAV 200 entering a no-fly zone.

In another example, the fly restriction data include 2D or 3D models of regulated fly zones for which at least one of a minimal and a maximal altitude for flying the UAV 200 is defined. The fly restriction data further comprise the minimal and / or maximal altitude.

The processing unit 110 automatically prevents the generation of a flight path of the UAV 200 which does not respect the minimal and / or maximal altitude defined for one of the regulated fly zones.

The no-fly zones and regulated fly zones are defined based on rules enforced by regulatory authorities (e.g. the European Union Aviation Safety Agency). The no-fly zones and regulated fly zones are independent of the 3D model of the elements of the environment. For example, taking the previous example of a car racing circuit comprising a racing track, at least one no-fly zone or regulated zone is enforced for a portion of the racing track. The 3D model comprises a 3D model of the racing track, and a 2D or 3D model of the at least one no-fly zone or regulated zone.

The platform 100 further provides the following (optional) functionality. A geofence is associated to the flight path. The geofence defines a 3D perimeter within which the UAV 200 is authorized to be located for a given waypoint of the flight path. The geofence generally applies to all the waypoints of the flight path. Alternatively, the geofence applies to a subset of the waypoints of the flight path. The geofence has a 3D shape generally centered on each waypoint of the flight path. For example, the geofence defines a sphere of a predetermined diameter centered on each waypoint of the flight path. The geofence is a component of the flight path, complementary to the 3D coordinates of each waypoint of the flight path.

The geofence is generated by processing unit 110. The geofence is determined automatically by the processing unit 110 based on configuration data. Alternatively or complementarily, the user has the capability to determine characteristics of the geofence.

Optionally, the geofence is not the same for each waypoint of the flight path, but is adapted to each waypoint of the flight path. For example, the processing unit 110 takes into consideration the same constraints (e.g. no-fly zones and regulated fly zones) for determining the geofence associated to each waypoint of the flight path, that were taken into consideration for generating the flight path.

The platform 100 further provides the following (optional) functionality. The generation of the current flight path takes into consideration one or more previously generated flight paths (e.g. stored in the memory 120). The processing unit 110 ensures that the current flight path does not intersect with the previously generated flight path(s). This functionally prevents a collision between two UAVs 200 following trajectories according to their respective flight paths.

The platform 100 further provides the following (optional) functionality. A virtual simulated environment for flying the UAV 200 is provided by the platform 200. Using the flight path and the 3D model of the environment, the processing unit 110 generates a simulated view of the environment from the UAV 200 (when the UAV 200 follows a trajectory according to the flight path), which is displayed on the display 150. More specifically, at several (or all) waypoints of the flight path, a view of the environment at this waypoint in the flight path is generated and displayed. Consecutive waypoints are generally separated by seconds or fractions of a second. The view is representative of a view of the environment (e.g. a car racing circuit) generated by a camera embarked on the UAV 200 operating in real flying conditions, the UAV 200 following the trajectory according to the flight path.

Once the generation of the flight path is completed, it can be stored in the memory 120 and / or transferred to the UAV 200. The flight path is directly transferred to the UAV 200 via the communication interface 130 (e.g. using a short range wireless communication technology or a wired communication technology respectively supported by the communication interface 130 and the UAV 200). Alternatively, the flight path is transferred to a third party device (not represented in Figure 1 for simplification purposes) via the communication interface 130, the third party device being in charge of loading the flight path into the UAV 200.

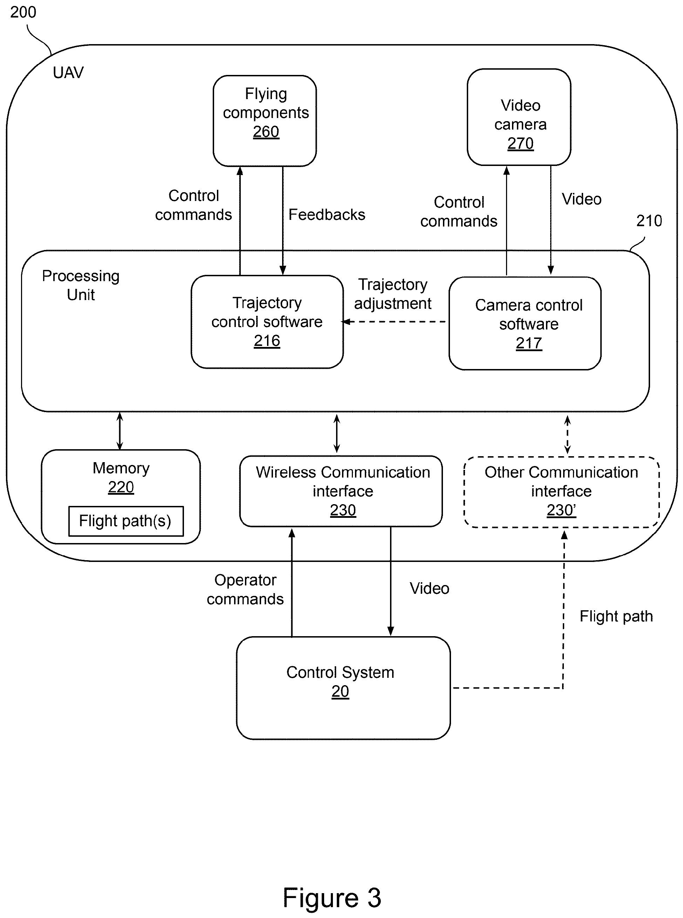

Reference is now made concurrently to **Figures 1** **and** **3****,** where Figure 3 represents components of the UAV 200. The UAV 200 is adapted for supporting aerial live video broadcasting (transmission of a video in real time from the UAV 200, the video being received by one or more equipment on the ground).

The UAV 200 is adapted for following a trajectory according to a flight path generated by the platform 100, for the purpose of having the UAV 200 perform an aerial broadcasting while following the trajectory.

The UAV 200 comprises a processing unit 210, memory 220, a wireless communication interface 230, flying components 260, and at least one video camera 270. The UAV 200 may comprise additional components (e.g. at least one other communication interface 230', at least one other video camera 270 not represented in Figure 3 for simplification purposes , etc.). Furthermore, additional components of the UAV 200 (e.g. a battery), which are not directly related to the functionalities described in the present disclosure are not represented.

The processing unit 210 is similar to the processing unit 110 of the platform 100.

The memory 220 is similar to the memory 120 of the platform 100.

The wireless communication interface 230 is similar to the communication interface 130 of the platform 100. The wireless communication interface 230 is adapted to exchange information with a control system 20 and supports at least one of the following wireless communication technologies: cellular, a radio frequency (RF) communication technology adapted for UAV transmissions, etc.

In an exemplary implementation, the second communication interface 230' is a wired communication interface. In another exemplary implementation, the second communication interface 230' is adapted for short range wireless communications. Examples of short range wireless communication technologies include Wi-Fi, Bluetooth^{®}, Bluetooth Low Energy (BLE), wireless mesh, etc. The second communication interface 230' is for example used for loading the flight path into the memory 220 of the UAV 200.

The flying components 260 include all the components involved in the motion and orientation of the UAV 200, including actuators, motors, propellers, sensors, etc. These components are well known in the art and are out of the scope of the present disclosure.

The video camera 270 is a camera adapted to generate videos and to be embedded in the UAV 200. More specifically, the video camera 270 is adapted to perform aerial live video broadcasting. Such video cameras are well known in the art and are out of the scope of the present disclosure.

The processing unit 210 implements a plurality of functionalities for controlling a trajectory of the UAV 200 according to the flight path. These functionalities will be described in detail in the following paragraphs. In an exemplary implementation, a trajectory control software 216 executed by the processing unit 210 implements these functionalities.

The processing unit 210 also implements a plurality of functionalities for controlling the video camera 270. These functionalities will be described in detail in the following paragraphs. In an exemplary implementation, a camera control software 217 executed by the processing unit 210 implements these functionalities.

**Following is a description of the trajectory control functionalities.**

One or more flight paths are stored in the memory 220 of the UAV 200. The flight paths have been generated by the platform 100 and transferred to the UAV 200, as described previously.

The UAV 200 is capable of operating in a first mode: static / completely pre-configured mode. An entire mission from launch place to execution place is generated, where maneuvers of the UAV 200 (operating the UAV 200 as a virtual 3D dolly) are prepared and precalculated by the platform 100 ahead of the flight, and are then loaded to any supported UAV 200 in the form of a corresponding flight path. Typically, a library of flight paths is stored in a database (e.g. at the control system 20) and a given flight path is uploaded to the UAV 200 (e.g. via the wired communication interface 230' to be stored in the memory 220) anytime the UAV 200 needs to execute a mission corresponding to the flight path.

The UAV 200 is also capable of operating in a second mode: dynamic mode. The UAV 200 is flown to a position where a mission shall start. Maneuvers of the UAV 200 (operating the UAV 200 as a virtual 3D dolly) are prepared dynamically in the form of a corresponding dynamic flight path. The dynamic flight path is uploaded (via the wireless communication interface 230 to be stored in the memory 220) during the flight of the UAV 200. The UAV 200 is triggered to execute the dynamic flight path when reaching the position where the mission shall start.

The following is applicable to any flight path stored in the memory 220 of the UAV 200. The processing unit 210 processes the flight path and generates control commands, which are sent to the flying components 260. The control commands control operations of the flying components 260, so that the UAV 200 follows a trajectory according to the flight path. The processing unit 200 generally also receives feedback from the flying components 260 (e.g. from sensors), the feedback being used to adjust the control commands. This functionality is well known in the art and is generally known as a UAV guidance functionality.

In an exemplary implementation, the 3D flight path is converted into a four-dimensional (4D) flight path, the fourth dimension being time. More specifically, considering a predetermined start time and a predetermined speed of the UAV 200, a timestamp is calculated for each waypoint of the 3D flight path. The 4D flight path comprises the timestamps associated to the corresponding waypoints. In this implementation, the control commands generated by the processing unit 210 and transmitted to the flying components 260, include an acceleration of the UAV in one or more directions. The value of the acceleration(s) is calculated by the processing unit 210 so that, the UAV 200 having reached a waypoint of the flying path at a time compliant with the associated timestamp, the UAV 200 reaches the next waypoint of the flying path at a future time compliant with the timestamp associated to the next waypoint.

The UAV 200 is capable of operating in a fully automated flying mode, where the trajectory of the UAV 200 is fully compliant with the flight path. In this case, there is no intervention of a UAV operator to modify the trajectory of the UAV 200.

The UAV 200 is also capable of operating in a semi-automated flying mode, where the trajectory of the UAV 200 is generally compliant with the flight path, but a UAV operator is allowed to modify the trajectory of the UAV 200. Various parameters of the trajectory of the UAV 200 may be modified. For example, the UAV operator is allowed to adjust the speed of the UAV 200 (e.g. slow down or speed up the movement of the UAV 200), to adjust the altitude of the UAV 200 up and down, etc.

For example, in the case of an adjustment of the altitude of the UAV 200, the trajectory of the UAV 200 follows a line in the air specified by the flight path, but the altitude of the UAV 200 is different from the altitude specified by the flight path. For this purpose, the UAV operator interacts with the control system 20, which generates one or more operator commands transmitted to the UAV 200 (e.g. increasing or decreasing the altitude of the UAV 200). The one or more operator commands are received via the wireless communication interface 230 of the UAV 200 and processed by the processing unit 210. The processing unit 210 processes the flight path and the one or more operator commands received from the control system 20 (and optionally the feedback received from the flying components 260), to generate the control commands sent to the flying components 260.

In some cases, the operator is allowed to modify the trajectory of the UAV 20 without any constraints. However, in general, there are some constraints on the modifications of the trajectory which can be requested by the operator.

In particular, if a geofence (generated by the platform 100) is associated to the flight path, the processing unit 210 determines a modification of the trajectory (based on the received one or more operator commands) compliant with the geofence. As mentioned previously, the geofence defines a 3D perimeter within which the UAV 200 is authorized to be located for a given waypoint of the flight path. The same geofence is defined for all the waypoints or different geofences are defined for the waypoints.

Considering that the UAV 200 has reached a given waypoint, the one or more operator commands are processed by the processing unit 210, to ensure that the adjustment of the trajectory triggered by the operator command(s) maintains the UAV 200 within the geofence. For example, the geofence is a sphere of one meter diameter (centered around the given way point). The altitude for the given waypoint is set to 60 meters in the flight path. The operator is allowed to adjust the altitude of the UAV 200 in the range of 59 to 61 meters for this waypoint.

The usage of the flight path allows the UAV 200 to repeat the same trajectory several times with the same accuracy. By contrast, a trajectory of a UAV entirely controlled by an operator cannot be repeated several times with the same level of accuracy.

The execution of a given flight path can be triggered in several ways. For example, the execution of the given flight path is triggered by a human being (e.g. a pilot in charge of the flight of the UAV 200 or a camera operator in charge of the video shooting). When the UAV 200 has reached a position where a given mission shall start, a command is transmitted to the UAV 200 (e.g. by the control system 20 via the wireless communication interface 230) to start executing the given flight path corresponding to the given mission. In another example, the execution of the given flight path is time-triggered (e.g. execution at a predetermined start time, repetition over a predetermined period of time (e.g. every 3 minutes), etc.). In still another example, the execution of the given flight path is event-triggered. The event is related to an object of interest monitored by the UAV 200 (e.g. a racing car crossing a line, etc.). The event can be detected by a human being, in which case it is similar to the previous example of the trigger by a human being. The event can also be detected automatically (e.g. detection of the crossing of the line by the racing car via an infrared sensor located in the vicinity of the line, detection of the occurrence of the event via an image recognition software applied to images taken by a camera located in the vicinity of the place of occurrence of the event, etc.). In the case of the automatic detection of the event, a command is automatically transmitted to the UAV 200 (via the wireless communication interface 230) to start executing a flight path corresponding to the event which has been detected.

**Following is a description of the camera control functionalities.**

The video generated by the video camera 270 is transmitted by the processing unit 210 to the control system 20 via the wireless communication interface 230. Optionally, the processing unit 210 performs a pre-processing of the video, before transmission to the control system 20. However, considering that the processing unit 210 may have limited processing capabilities, further processing of the video is generally performed by the control system 20 (or another device to which the video is forwarded). However, the video is optionally processed for the purpose of adjusting the operating conditions of the video camera 270, as illustrated in the following.

The processing unit 210 also controls the operating conditions of the video camera 270, which includes applying a modification of the operating conditions of the video camera 270 along the trajectory of the UAV 200.

The UAV 200 is capable of operating the video camera 270 in a fully automated mode. In this case, the operating conditions of the video camera 270 are either predetermined or automatically determined by the processing unit 210. The operating conditions are enforced by the processing 270 via the sending of control commands to the video camera 270. Information defining the predetermined operating conditions can be uploaded via the wireless communication interface 230 (or the wired communication interface 230') and stored in the memory 220. Automatic determination of the operating conditions are for example implemented via a video camera control algorithm executed by the processing unit 210.

The UAV 200 is also capable of operating the video camera 270 in a manual mode. In this case, the operating conditions of the video camera 270 are controlled / modified via operator commands received via the wireless communication interface 230 from a remote operator. The control commands sent to the video camera 270 are generated based on the received operator commands.

A first type of operating conditions includes operating parameters of the video camera 270 (which directly impact the operations of the video camera 270). The operating parameters include a field of view (e.g. commands for controlling one or more gimbals (not represented in the Figures) to which the video camera 270 is secured are transmitted to the video camera 270), a zoom (e.g. zoom in or zoom out commands are transmitted to the video camera 270), etc.

Another type of operating conditions includes parameters which do not directly impact the operations of the video camera 270, but impact the video recorded by the video camera 270. Examples of such parameters include the current position and orientation of the UAV 200 (which impacts the angle of view of the video camera 270), the distance from the UAV 200 to the target, etc. The trajectory of the UAV 200 needs to be modified to control such parameters.

The UAV 200 is capable of operating the video camera 270 in still another mode: a fixed mode. In this mode, the video camera 270 is fixed to a specific Region of Interest (ROI) during the flight of the UAV 200. In an exemplary implementation, the flight path is designed so as to provide a satisfactory video recording, without modifying the operating conditions of the video camera 270 when the UAV 200 is following a trajectory according to the flight path. For example, the flight path is designed to perform a 360 degrees fly around an object of interest (e.g. a racing car), during which the field of view of the video camera 270 remains fixed.

In an exemplary implementation of the fully automated mode, a tracking algorithm is executed by the processing unit 210, to follow one or more objects with the video camera 270. For instance, in the context of a car racing circuit, the tracking algorithm is capable of analyzing the video generated by the video camera 270, to detect a target (e.g. a car assigned by an operator of the UAV 200, a car identified by its racing number, a group of cars, the lead car, etc.) in an image (or a series of images) of the video, and to further adjust the operating conditions of the video camera 270 to follow the target. The tracking algorithm makes use of Artificial Intelligence based technologies (e.g. machine learning (e.g. neural networks, etc.), etc.) to implement the recognition of target(s) in an image (or a series of images) of the video.

The tracking algorithm has the capability to adjust the previously mentioned operating parameters (e.g. field of view, zoom, etc.) of the video camera 270.

Optionally, the tracking algorithm also has the capability to request an adjustment of the trajectory of the UAV 200, for example to adjust the angle of view of the video camera 270, to adjust the distance from the UAV 200 to the target, etc. The adjustment may take several forms, including defining a target point out of the flight path. The adjustment is defined by the camera control functionality and implemented by the trajectory control functionality.

More specifically, the trajectory control functionality adapts the trajectory of the UAV 200 to reach the target point. However, when a geofence is included in the flight path, the adaptation of the trajectory is limited to a movement of the UAV 200 within the geofence.

The UAV 200 is also capable of operating the video camera 270 in a semi-automated mode. In this case, the UAV 200 operates in the automated mode, except when operator commands for controlling the video camera 270 are received from the control system 20 via the wireless communication interface 230. The operator commands are processed by the processing unit 210 in a manner similar to the previously described automated mode. The operator commands generally have precedence over the automated mode, as long as they are considered valid by the camera control functionalities and the trajectory control functionalities. At least some of the adjustments of the operating conditions of the video camera 270 available in the automated mode are also available in the semi-automated mode.

A plurality of UAVs 200 can be operated simultaneously, each UAV 200 having its own flight path resulting in independent trajectories for the plurality of UAVs 200. The flight paths are generated by the platform 100, ensuring that no collision occurs between the UAVs 200. In an exemplary use, the plurality of videos transmitted by the UAVs 200 provide a view from different angles of the same target (e.g. a car or a group of cars). The flight paths of the UAVs 200 can be coordinated, in order to obtain a predetermined global view of the event being covered by the UAVs 200.

The implementation of the control system 20 is out of the scope of the present disclosure. For example, the control system 20 is a single (portable) computing device. Alternatively, the control system 20 comprises a plurality of equipment, including computers and / or servers, screens, etc. An integrated control system 20 is used for controlling the trajectory of the UAV 200 and the operations of the video camera 270 of the UAV 200. Alternatively, two independent control systems 20 are used for respectively controlling the trajectory of the UAV 200 and the operations of the video camera 270. Furthermore, the same or two different operators control the trajectory of the UAV 200 and the operations of the video camera 270.

Although the previous use cases of usage of the UAV 200 have been described in the context of a car racing circuit, a person skilled in the art will readily adapt these use cases to other contexts (e.g. boat racing, etc.).

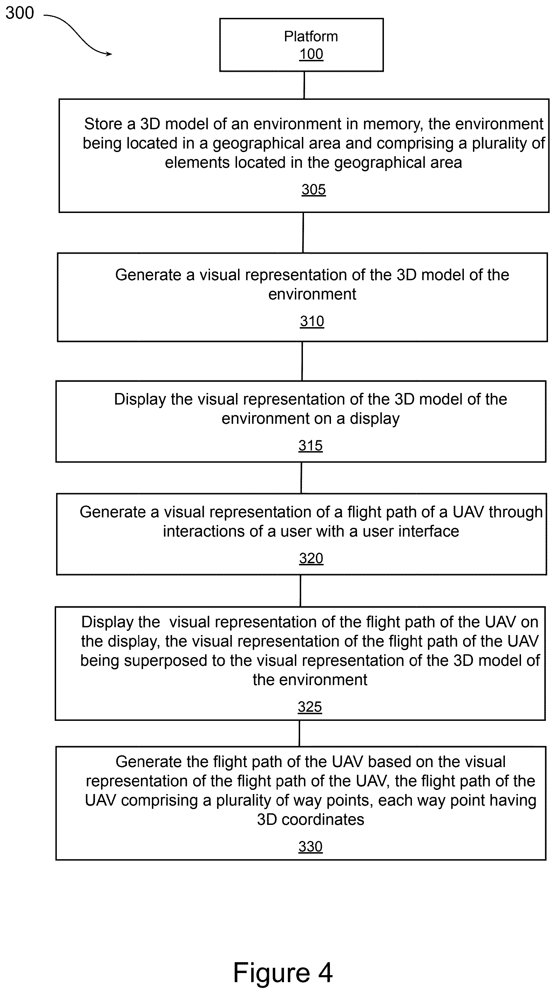

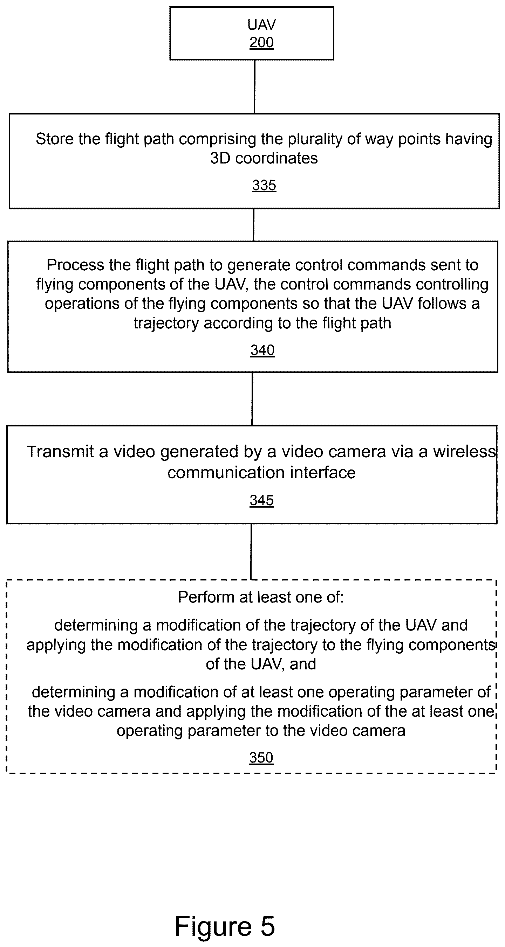

Reference is now made concurrently to **Figures 1****,** **2****,** **3****,** **4** **and** **5****,** where Figures 4 and 5 represent a method 300 for providing aerial live broadcasting from a UAV.

Steps 305 to 330 are implemented by the platform 100. Furthermore, one or more dedicated computer programs have instructions for implementing steps 305 to 330 of the method 300. The instructions are comprised in a non-transitory computer-readable medium (e.g. the memory 120) of the platform 100. The instructions, when executed by the processing unit 110 of the platform 100, provide for implementing steps 305-330 of the method 300. The instructions are deliverable to the platform 100 via an electronically-readable media such as a storage media (e.g. any internally or externally attached storage device connected via USB, Firewire, SATA, etc.), or via communication links (e.g. via a communication network through the communication interface 130).

Steps 335 to 350 are implemented by the UAV 200. Furthermore, one or more dedicated computer programs have instructions for implementing steps 335 to 350 of the method 300. The instructions are comprised in a non-transitory computer-readable medium (e.g. the memory 220) of the UAV 200. The instructions, when executed by the processing unit 210 of the UAV 200, provide for implementing steps 335-350 of the method 300. The instructions are deliverable to the UAV 200 via an electronically-readable media such as a storage media (e.g. any internally or externally attached storage device connected via USB, Firewire, SATA, etc.), or via communication links (e.g. via a communication network through the wireless communication interface 230 or the other communication interface 230').

The method 300 comprises the step 305 of storing the 3D model of the environment in the memory 120. As mentioned previously, the environment is located in a geographical area and comprises a plurality of elements located in the geographical area. Step 305 is executed by the processing unit 110.

The method 300 comprises the step 310 of generating the visual representation 152 of the 3D model of the environment. Step 310 is executed by the processing unit 110.

The method 300 comprises the step 315 of displaying the visual representation 152 of the 3D model of the environment on the display 150. Step 315 is executed by the processing unit 110.

The method 300 comprises the step 320 of generating the visual representation 154 of a flight path of the UAV 200 through interactions of a user with the user interface 140. Step 320 is executed by the processing unit 110.

The method 300 comprises the step 325 of displaying the visual representation 154 of the flight path of the UAV 200 on the display 150, the visual representation 154 of the flight path of the UAV 200 being superposed to the visual representation 152 of the 3D model of the environment. Step 325 is executed by the processing unit 110.

The method 300 comprises the step 330 of generating the flight path of the UAV 200 based on the visual representation 154 of the flight path of the UAV, the flight path of the UAV 200 comprising a plurality of way points, each way point having 3D coordinates. Step 330 is executed by the processing unit 110.

Although not represented in Figures 4 and 5 for simplification purposes, the flight path is transmitted from the platform 100 to the UAV 200.

The method 300 comprises the step 335 of storing the flight path comprising the plurality of way points having 3D coordinates (optionally, a geofence is associated to at least some of the way points). Step 335 is executed by the processing unit 210.

The method 300 comprises the step 340 of processing the flight path to generate control commands sent to the flying components 260. The control commands control operations of the flying components 260, so that the UAV 200 follows a trajectory according to the flight path. Step 340 is executed by the processing unit 210.

The method 300 comprises the step 345 of transmitting a video generated by the video camera 270 via the wireless communication interface 230. Step 345 is executed by the processing unit 210.

The method 300 comprises the optional step 350 of performing at least one of: determining a modification of the trajectory of the UAV 200 (optionally compliant with the optional geofence mentioned at step 335) and applying the modification of the trajectory to the flying components 260, and determining a modification of at least one operating parameter of the video camera 270 and applying the modification of the at least one operating parameter to the video camera 270. Step 350 is executed by the processing unit 210.

Although the present disclosure has been described hereinabove by way of non-restrictive, illustrative embodiments thereof, these embodiments may be modified at will within the scope of the appended claims without departing from the spirit and nature of the present disclosure.

## Claims

1. A flight path generation platform (100), comprising:
a display (150);
a user interface (140);
memory (120) for storing a three-dimensional (3D) model of an environment, the environment being located in a geographical area and comprising a plurality of elements located in the geographical area; and
a processing unit (110) for:
generating a visual representation of the 3D model of the environment (152);
displaying the visual representation of the 3D model of the environment (152) on the display (150);
generating a visual representation of a flight path (154) of an unmanned aerial vehicle (UAV) on the display (150) through interactions of a user with the user interface (140), the visual representation of the flight path (154) being superposed to the visual representation of the 3D model of the environment (152); and
generating the flight path of the UAV based on the visual representation of the flight path (154), the flight path of the UAV comprising a plurality of way points, each way point having 3D coordinates.

2. The platform (100) of claim 1, wherein the 3D model of the environment comprises a 3D model of the elements of the environment and the visual representation of the 3D model of the environment (152) comprises a visual representation of the 3D model of the elements of the environment.

3. The platform (100) of claim 1, wherein a determination of the 3D coordinates of the way points is based on 3D coordinates of the 3D model of the environment, taking into consideration the relative position on the display (150) of the visual representation of the flight path (154) with respect to the visual representation of the 3D model of the environment (152).

4. The platform (100) of claim 1, wherein the geospatial coordinates comprise absolute Global Positioning System (GPS) coordinates and altitude.

5. The platform (100) of claim 1, wherein the 3D model of the environment further comprises fly restriction data for enforcing at least one of a no-fly zone and a regulated fly zone, the generation of the flight path of the UAV taking into consideration the fly restriction data.

6. The platform (100) of claim 5, wherein the fly restriction data comprise a two-dimensional (2D) or a 3D model of the at least one of the no-fly zone and the regulated fly zone.

7. The platform (100) of claim 1, wherein the processing unit (110) further generates a geofence for at least some of the way points of the flight path, the geofence defining a 3D perimeter within which the UAV is authorized to be located for a given waypoint of the flight path.

8. A unmanned aerial vehicle (UAV) (200) comprising:
memory (220) for storing a flight path comprising a plurality of way points having 3D coordinates;
a video camera (270) adapted to perform aerial live video broadcasting;
a wireless communication interface (230);
flying components (260); and
a processing unit (210) for:
processing the flight path to generate control commands sent to the flying components (260), the control commands controlling operations of the flying components (260) so that the UAV (200) follows a trajectory according to the flight path; and
transmitting a video generated by the video camera (270) via the wireless communication interface (230).

9. The UAV (200) of claim 8, wherein the processing unit (210) generates a timestamp for each way point of the flight path, each timestamp being generated based on a predetermined start time and a predetermined speed of the UAV (200); and the control commands sent to the flying components (260) comprise an acceleration of the UAV (200) in one or more directions, the acceleration of the UAV (200) in the one or more directions being calculated by the processing unit (210) so that the UAV (200) having reached a given waypoint of the flying path at a time compliant with the associated timestamp, the UAV (200) reaches the next waypoint of the flying path at a future time compliant with the timestamp associated to the next waypoint.

10. The UAV (200) of claim 8, wherein a geofence is associated to at least some of the way points, and wherein the processing unit (210) determines a modification of the trajectory of the UAV (200) compliant with the geofence and applies the modification of the trajectory to the flying components (260).

11. The UAV (200) of claim 10, wherein the processing unit (210) receives one or more commands via the wireless communication interface (230) for modifying the trajectory of the UAV (200), the processing unit (210) determining based on the one or more commands the modification of the trajectory of the UAV (200) compliant with the geofence.

12. The UAV (200) of claim 8, wherein the processing unit (210) determines a modification of at least one operating parameter of the video camera (270) and applies the modification of the at least one operating parameter to the video camera (270), the modification being determined based on at least one of the following: predetermined information stored in the memory (220), a command received via the wireless communication interface (230), and execution by the processing unit (210) of an algorithm for automatically controlling the video camera (270).

13. The UAV (200) of claim 8, wherein the processing unit (210) receives one or more commands via the wireless communication interface (230) for modifying operating conditions of the video camera (270), and the processing unit (210) performs at least one of the following:
determining a modification of at least one operating parameter of the video camera (270) to modify the operating conditions of the camera (270) according to the one or more commands, and applying the modification of the at least one operating parameter to the video camera (270); and
determining a modification of the trajectory of the UAV (200) to modify the operating conditions of the video camera (270) according to the one or more commands, and applying the modification to the trajectory to the flying components (260).

14. The UAV (200) of claim 8, wherein the processing unit (210) executes a tracking algorithm to follow one or more targets with the video camera (270), the tracking algorithm automatically determining at least one of the following based on an analysis of the video generated by the video camera (270):
a modification of at least one operating parameter of the video camera (270), the modification of the at least one operating parameter being applied by the processing unit (210) to the video camera (270); and
a modification of the trajectory of the UAV (200), the modification to the trajectory being applied by the processing unit (210) to the flying components (260).

15. A method (300) for providing aerial live broadcasting from an unmanned aerial vehicle (UAV) (200), the method comprising:
storing (305) in a memory (120) of a flight path generation platform (100) a three-dimensional (3D) model of an environment, the environment being located in a geographical area and comprising a plurality of elements located in the geographical area
generating (310) by a processing unit (110) of the platform (100) a visual representation of the 3D model of the environment (152);
displaying (315) by the processing unit (110) of the platform (100) the visual representation of the 3D model of the environment (152) on a display (150) of the platform (100);
generating (320) by the processing unit (110) of the platform (100) a visual representation of a flight path (154) of the UAV (200) through interactions of a user with a user interface (140) of the platform (100);
displaying (325) by the processing unit (110) of the platform (100) the visual representation of the flight path (154) of the UAV (100) on the display (150) of the platform (100), the visual representation of the flight path (154) of the UAV (200) being superposed to the visual representation of the 3D model of the environment (152);
generating (330) by the processing unit (110) of the platform (100) the flight path of the UAV (100) based on the visual representation of the flight path (154) of the UAV (200), the flight path of the UAV (200) comprising a plurality of way points, each way point having 3D coordinates;
storing (335) the flight path in a memory (220) of the UAV (200);
processing (340) by a processing unit (210) of the UAV (200) the flight path to generate control commands sent to flying components (260) of the UAV (200), the control commands controlling operations of the flying components (260), so that the UAV (200) follows a trajectory according to the flight path;
transmitting (345) a video generated by a video camera (270) of the UAV (200) via a wireless communication interface (230) of the UAV (200); and
performing (350) at least one of:
determining by the processing unit (210) of the UAV (200) a modification of the trajectory of the UAV (200) compliant with a geofence associated to at least some of the way points and applying the modification of the trajectory to the flying components (260) of the UAV (200); and
determining by the processing unit (210) of the UAV (200) a modification of at least one operating parameter of the video camera (270) of the UAV (200) and applying the modification of the at least one operating parameter to the video camera (270) of the UAV (200).
